Europäisches Patentamt

European Patent Office

Office européen des brevets

(11) Veröffentlichungsnummer: **0 583 252 B1**

(12) **EUROPÄISCHE PATENTSCHRIFT**

(45) Veröffentlichungstag der Patentschrift: **15.03.95**

(51) Int. Cl.⁶: **B60T 8/00**

(21) Anmeldenummer: **92907126.4**

(22) Anmeldetag: **19.03.92**

(86) Internationale Anmeldenummer:
**PCT/EP92/00609**

(87) Internationale Veröffentlichungsnummer:
**WO 92/19478 (12.11.92 92/28)**

(54) **SCHALTUNGSANORDNUNG FÜR EINE BREMSANLAGE MIT ELEKTRONISCHER BLOCKIERSCHUTZREGELUNG.**

(30) Priorität: **06.05.91 DE 4114734**

(43) Veröffentlichungstag der Anmeldung:
**23.02.94 Patentblatt 94/08**

(45) Bekanntmachung des Hinweises auf die Patenterteilung:
**15.03.95 Patentblatt 95/11**

(84) Benannte Vertragsstaaten:
**DE FR GB**

(56) Entgegenhaltungen:
EP-A- 88 894          EP-A- 128 582
EP-A- 381 957         WO-A-91/05687
DE-A- 3 925 828       GB-A- 2 165 904

(73) Patentinhaber: **ITT Automotive Europe GmbH
Guerickestrasse 7
D-60488 Frankfurt am Main (DE)**

(72) Erfinder: **GIERS, Bernhard
Messeler Weg 12
D-6101 Rossdorf 1 (DE)**
Erfinder: **NIEPELT, Mathias
Wingertstrasse 20
D-6361 Niddatal 1 (DE)**
Erfinder: **WOYWOD, Jürgen
Schillerring 7
D-6234 Hattersheim 1 (DE)**
Erfinder: **FACHINGER, Georg
Krüsmannstrasse 10
D-6250 Limburg (DE)**
Erfinder: **WIELAND, Andreas
Obere Ebenhalde 20B
D-8097 Wasserburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung bezieht sich auf eine Schaltungsanordnung für eine Kraftfahrzeug-Bremsanlage mit elektronischer Blockierschutzregelung, mit Schaltkreisen zur individuellen Regelung des Bremsdruckkes in den Radbremsen der beiden Räder einer Achse in Abhängigkeit von dem mit Radsensoren gemessenen Raddrehverhalten, mit Schaltkreisen zur Beschränkung des Giermomentes infolge von Bremsdruckdifferenzen an den Rädern einer Achse, wobei die zulässige Druckdifferenz in Abhängigkeit von dem Reibwertunterschied an beiden Rädern variierbar ist.

Eine derartige Schaltungsanordnung ist aus der DE 39 25 828 A1 bekannt. Es handelt sich um ein Antiblockierregelsystem mit individueller Regelung des Bremsdruckes an den beiden Rädern einer Achse. Zur Beschränkung des Giermomentes auf Fahrbahnen mit sehr unterschiedlichem Reibwert an der rechten und linken Seite, d.h. bei μ-split-Bedingungen, wird die Druckdifferenz begrenzt und dabei die zulässige Druckdifferenz in Abhängigkeit von dem Reibwertunterschied und von der Höhe des niedrigeren Reibwerts bestimmt. Bei einem Überschreiten dieser zulässigen Druckdifferenz wird unter Berücksichtigung des Bewegungszustandes des low-Rades Druck am high-Rad abgebaut. Zur Bestimmung der zulässigen Druckdifferenz wird bei diesem bekannten Antiblockierregelsystem der vom Fahrer eingesteuerte Druck an dem rechten und an dem linken Rad gemessen und jeweils der Solldruck mit dem Istdruck verglichen. Über den Bremsdruck wird der Reibwert (Reibbeiwert) abgeschätzt. Bei Überschreiten einer vorgegebenen Druckdifferenz wird an dem high-Rad, nämlich an dem Rad mit dem höheren Druck, Bremsdruck abgebaut.

Aus der vorgenannten und aus der DE 28 51 107 C2 ist es auch schon bekannt, den Druckabbau zur Giermomentenbeschränkung jeweils dann vorzunehmen, wenn am Ende eines Regelzyklus das low-Rad wieder in den stabilen Bereich gelangt.

Der Aufwand für eine radindividuelle Bremsdruckmessung, Auswertung und Überwachung der Meßergebnisse ist nicht unerheblich.

Der Erfindung liegt daher die Aufgabe zugrunde, eine Schaltungsanordnung für ein Antiblockierregelsystem zu entwickeln, das einerseits durch Beschränkung der Giermomente, auch und gerade in kritischen Situationen mit hoher Reibwertdifferenz auf der rechten und linken Seite, die Aufrechterhaltung der Fahrstabilität des Fahrzeugs sicherstellt und dabei gleichzeitig durch möglichst gute Ausnutzung der Leistungsfähigkeit der Bremsen für eine wirksame Abbremsung mit kurzem Bremsweg Sorge trägt.

Es hat sich gezeigt, daß diese Aufgabe durch eine Schaltungsanordnung der eingangs genannten Art gelöst werden kann, deren Besonderheit darin besteht, daß Schaltkreise vorhanden sind, die fortlaufend aus Druckabbausignalen einen die Druckdifferenz an den beiden Rädern der einen Achse wiedergebenden Wert ermitteln, die bei unterschiedlichen Reibwerten (μ-split) den mittleren Druckaufbaugradienten an dem high-Rad, d.h. an dem den geringeren Druckabbau aufweisenden Rad, in Abhängigkeit von der Druckdifferenz bzw. von dem die Druckdifferenz wiedergebenden Wert und von der Fahrzeugverzögerung variieren und die zum Zeitpunkt des Auftretens der sogenannten Giermomentenspitze, nämlich unmittelbar vor dem Wiedereintritt des auf dem niedrigeren Reibwert laufenden Rades in den stabilen Bereich, den Bremsdruck an dem high-Rad um einen (unter anderem) von der Fahrzeugverzögerung und von der Druckdifferenz abhängigen Wert reduzieren.

Erfindungsgemäß wird also, ohne Drucksensoren zu verwenden, auf einer Fahrbahn mit unterschiedlichem Reibwert auf der rechten und linken Fahrzeugseite der Bremsdruck und die Bremsdruckdifferenz derart geregelt, daß unabhängig von dem Einsetzen der Blockierschutzregelung und dem Regelungsverlauf das Giermoment auf einem für die Fahrstabilität unkritischen Wert begrenzt bleibt. Die hierzu erforderliche Beschränkung des Bremsdruckes oder Bremsdruckanstieges auf der Seite des höheren Reibwertes ist vergleichsweise gering, wodurch ein kurzer Bremsweg und gleichzeitig eine hohe Fahrstabilität gewährleistet sind. Dies gilt auch für Fahrzeuge, die durch ihre Konstruktion, d.h. durch die Fahrzeuggeometrie, oder durch Gewichtsverteilung in kritischen Bremssituationen, z.B. bei einem Spurwechsel auf μ-split, beim Übergang von homogenem Reibwert auf μ-split oder umgekehrt zur Instabilität infolge von Giermomenten neigen.

Nach einer vorteilhaften Ausführungsart der Erfindung werden zur Ermittlung des Druckdifferenz-Wertes die Druckabbauzeiten radindividuell akkumuliert und es wird die Differenz der in den beiden Akkumulatoren vorhandenen Beträge gebildet. Dabei ist es zweckmäßig, bei jedem Wiedereintritt eines der beiden Räder in die stabile Phase den Inhalt der beiden Akkumulatoren um den gleichen, maximal möglichen Betrag zu reduzieren, so daß jeweils der eine Akkumulatorinhalt auf Null zurückgesetzt wird; der Druckdifferenzwert bleibt dabei gleich.

Bei dieser Art der Errechnung oder Ermittlung der Druckdifferenz in den beiden Rädern einer Achse wird beim Akkumulieren der Druckabbauzeiten eine Gewichtung vorgenommen, die den Verlauf des bremssystembedingten Druckabbau-Gradienten

- anfangs steiler, dann flacher Druckabbau mit asymptotischer Näherung an null - berücksichtigt.

Nach einem weiteren Ausführungsbeispiel der Erfindung wird der mittlere Druckaufbaugradient des an dem high-Rad anliegenden Bremsdruckes in Abhängigkeit von der Fahrzeugverzögerung abgeflacht, wobei in dem bei hohem Reibwert-Unterschied stabilitätskritischem Bereich der Fahrzeugverzögerung die Abflachung maximal wird. Je nach Fahrzeugtyp und Beladung liegt der Bereich der kritischen Fahrzeugverzögerung zwischen 0,3g und 0,6g, insbesondere zwischen 0,35 und 0,45g.

Der Zeitpunkt des Auftretens der Giermomentenspitze, die unmittelbar bzw. kurz vor dem Wiedereinlaufen des Rades in die stabile Phase liegt, läßt sich durch die Bestimmung des Radschlupfes und der Wiederbeschleunigung des Rades ermitteln. Zu diesem Zeitpunkt nähert sich nämlich die Radgeschwindigkeit der Fahrzeuggeschwindigkeit, der Radschlupf wird also sehr klein und die Beschleunigung des Rades ist positiv.

Eine vorteilhafte Ausgestaltung der Erfindung besteht darin, zur Giermomentenbeschränkung den Bremsdruck an dem high-Rad unmittelbar vor dem Auftreten der Giermomentenspitze durch einen Druckabbaupuls zu reduzieren, der nach der Beziehung

$$T_{Puls-hR} = K * T_{Abb-lR} * f(d\ Druckabb.) * f[dV/dt\ (FZ)]$$

gemessen wird, wobei K eine von dem Druckaufbaugradienten des Systems abhängige Konstante ist, $T_{Abb-lR}$ die Druckabbauzeit am low-Rad im jeweiligen Regelzyklus wiedergibt, f(dDruckabb.) eine Funktion der aus den Druckabbauzeiten ermittelten Druckdifferenz ist und f[dV/dt (FZ)] einen von der Fahrzeugverzögerung abhängigen Koppelfaktor darstellt.

Schließlich ist es erfindungsgemäß noch vorgesehen, die Ansprechschwelle der Giermomentenbeschränkung in bestimmten Situationen einzuschränken oder die Giermomentenbeschränkung abzuschalten, z.B. als Reaktion auf das Signal einer Kurvenerkennung, Schwingungserkennung usw.

Weitere Merkmale, Vorteile und Anwendungsmöglichkeiten der Erfindung gehen aus der folgenden Darstellung eines Ausführungsbeispiels anhand der beigefügten Prinzipdarstellung und der Diagramme hervor.

Es zeigen

Fig. 1    in Blockdarstellung die wichtigsten Komponenten einer Schaltungsanordnung nach der Erfindung,

Fig. 2    in Diagrammen den Bremsdruckverlauf, die Druckabbau-Bilanz und die Druckdifferenz der beiden Räder einer Achse auf homogenem Reibwert,

Fig. 3    die gleichen Diagramme wie Fig. 2, jedoch bei unterschiedlichem Reibwert auf der rechten und linken Fahrzeugseite,

Fig. 4    im Diagramm die Abflachung des Druckaufbaugradienten in Abhängigkeit von der Fahrzeugverzögerung,

Fig. 5    im Diagramm den Koppelfaktor für die Bemessung des Druckabbaupulses zur Giermomentenbeschränkung in Abhängigkeit von der Fahrzeugverzögerung und

Fig. 6    in Diagrammen den Geschwindigkeitsverlauf der beiden Vorderräder, den Bremsdruckverlauf und den Giermomentenverlauf auf einer Fahrbahn mit unterschiedlichem Reibwert auf der rechten und linken Seite (μ-split) bei Einsatz der erfindungsgemäßen Schaltungsanordnung nach Fig. 1.

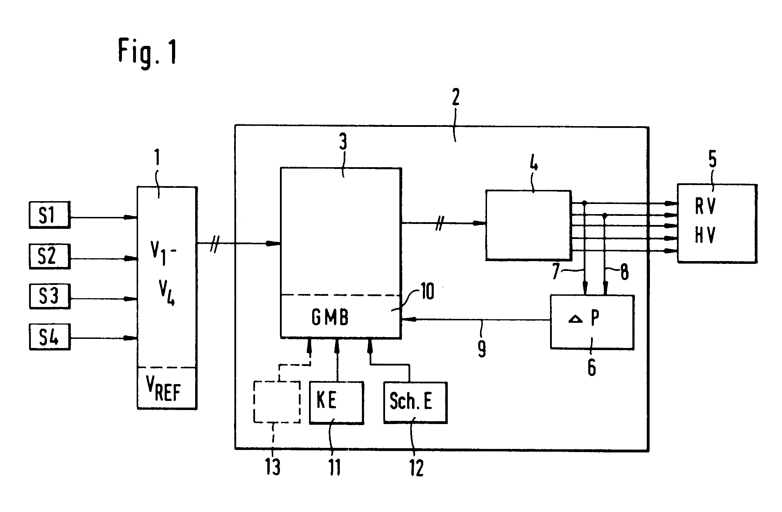

In Fig. 1 sind in starker Vereinfachung die wichtigsten Komponenten einer elektronischen Schaltungsanordnung für eine blockiergeschützte Bremsanlage wiedergegeben. Das Drehverhalten der einzelnen Fahrzeugräder wird mit Hilfe von Radsensoren S1 bis S4 erfaßt. In einer Auswerteschaltung 1 wird aus den Sensorsignalen der Geschwindigkeitsverlauf der einzelnen Räder $v_1$ bis $v_4$ gewonnen und eine Fahrzeugreferenzgeschwindigkeit $v_{REF}$ abgeleitet, die als Vergleichs- oder Bezugsgröße zur Beurteilung und Regelung der Geschwindigkeit der einzelnen Räder benötigt wird.

Eine elektronische Gesamtschaltung 2 umfaßt einen Logikblock, in dem die Geschwindigkeitssignale $v_1$ bis $v_4$ und $v_{REF}$ logisch verknüpft und ausgewertet und schließlich Signale zur Bremsdruckmodulation erzeugt werden. Die Ausgangssignale des Logikblockes 3 führen zu einer sogenannten Ventilsteuerung 4, in der die unmittelbar zur Steuerung von Radventilen RV, Haupt- oder Hilfsventilen HV - zusammengefaßt in dem Ventilblock 5 - dienenden Signale gewonnen werden. Als Radventile werden üblicherweise elektromagnetisch betätigbare Hydraulikventile, die als Einlaß- oder Auslaßventile ausgebildet sind, verwendet. Ein in manchen Ausführungsbeispielen noch benötigter Betätigungsweg zur Steuerung einer Hilfsdruckquelle, wie einer Hydraulikpumpe, ist der Einfachheit halber in Fig. 1 nicht dargestellt.

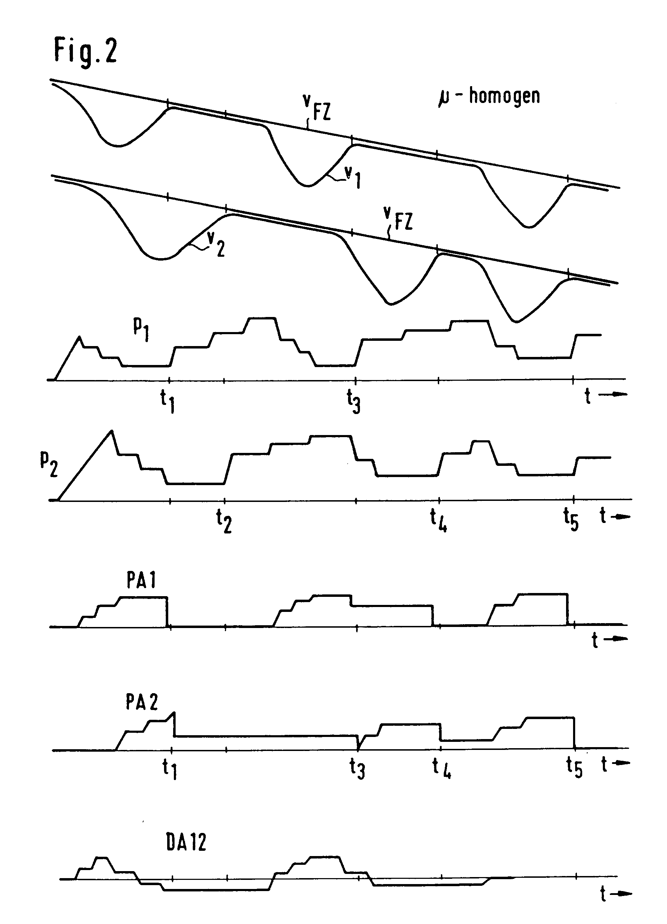

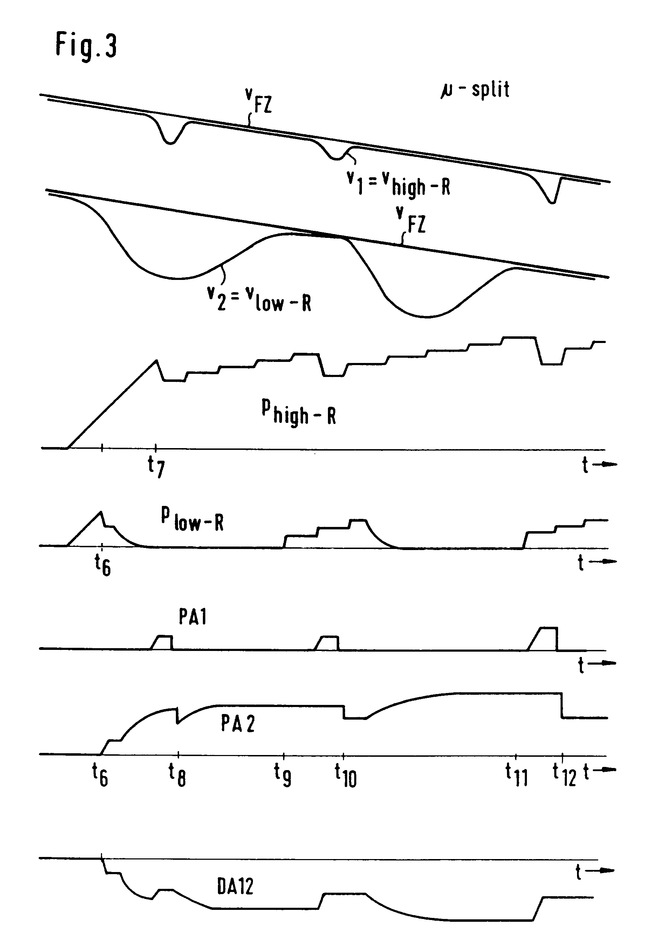

Außerdem enthält die Gesamtschaltung 2 einen Meßkreis 6, mit dem ein Maß für die Druckdifferenz an den beiden individuell geregelten Rädern einer Achse gewonnen wird. Diesem Differenzdruck-Meßkreis 6 werden lediglich die Ventil-Stellbefehle für die beiden Vorderradbremsen zugeleitet, weil im vorliegenden Beispiel, wie anschließend anhand der Diagramme noch näher erläutert wird, ein Wert für die Druckdifferenz an den Vorderrädern allein aus den Bremsdruck-Abbausignalen gewonnen wird. Diese Kopplung ist durch die beiden Signalleitungen 7,8 symbolisiert, die vom Ausgang der Ventilsteuerung 4 zu dem Meßkreis 6 führen. In dem Differenzdruck-Meßkreis 6 sind, wie anschließend anhand der Fig. 2 und 3 erläutert wird, Akkumulatoren enthalten, die die gewichteten Druckabbausignale akkumulieren. Weitere Schaltkreise ermitteln die Druckdifferenz. Das Ausgangssignal des Meßkreises 6 führt über eine Signalleitung 9 zum Logikblock 3, um dort einen durch Strichelung symbolisch abgetrennten Schalkreis 10 anzusteuern, der die eigentliche "Giermomentenbeschränkung" (GMB) bewirkt.

Durch Sonderfunktionen, wie eine Kurvenerkennung 11 oder Schwingungserkennug 12, können die Ansprechschwellen der Giermomentenbeschränkung 10 verändert oder die Giermomentenbeschränkung, z.B. bei Kurvenerkennung, zeitweise abgeschaltet werden. Ein gestrichelter Schaltblock 13 symbolisiert, daß noch weitere Sonderfunktionen zur Beeinflussung der Giermomentenbeschränkung 10 bei Bedarf angeschaltet werden können.

Die anhand der Fig. 1 beschriebenen und erläuterten Funktionen können grundsätzlich durch festverdrahtete Schaltkreise, jedoch auch durch programmgesteuerte Schaltungen, wie Microcomputer, realisiert werden.

Fig. 2 zeigt im Diagramm eine Bremsdruckregelung oder Blockierschutzregelung auf homogenem Reibwert. "$v_{FZ}$" symbolisiert die Fahrzeuggeschwindigkeit oder die Fahrzeugreferenzgeschwindigkeit, "$v_1, v_2$" die Geschwindigkeiten der beiden Räder einer Achse. Der entsprechende Druckverlauf am Rad 1, das sich mit der Geschwindigkeit $v_1$ bewegt, ist mit $p_1$, der Druckverlauf am zweiten Rad mit $p_2$ bezeichnet. Die akkumulierten Druckabbauzeiten des ersten Rades sind mit PA1, des zweiten Rades mit PA2 und die Differenz dieser beiden Werte mit DA12 bezeichnet.

Die Normierungsvorgänge der akkumulierten Drucksignale PA1 und PA2, bei denen jeweils die Akkumulator-Inhalte um den gleichen, maximal möglichen Betrag reduziert werden, finden zu den Zeitpunkten $t_1, t_2$, $t_3$, $t_4$ und $t_5$ statt. Bei $t_2$ ist allerdings der Akkumulatorinhalt PA1 des Rades 1 bereits Null, so daß sich am Akkumulatorinhalt PA2 nichts ändert. Diese Zeiten $t_1$ bis $t_5$ markieren die Zeitpunkte, an denen jeweils ein Rad wieder in den stabilen Bereich einläuft.

Die Druckdifferenz DA12 ist in der Situation, auf die sich Fig. 2 bezieht, nämlich bei homogenem Reibwert rechts/links erwartungsgemäß klein, so daß kein Bedarf an einer Giermomentenbeschränkung besteht.

Fig. 3 zeigt die gleichen Kurven wie Fig. 2, jetzt jedoch bezogen auf eine Situation mit unterschiedlichem Reibwert rechts/links ($\mu$-split). Das Rad 1 mit dem Drehverhalten $v_1$ ist in diesem Fall das high-Rad, weil es sich auf der Fahrzeugseite mit hohem Reibwert befindet. Auf der Fahrzeugseite mit niedrigem Reibwert und dem entsprechenden Radverlauf $v_2$ setzt die Druckreduzierung zum Zeitpukt $t_6$ ein und führt sehr bald zum praktisch völligen Druckabbau. Das high-Rad gelangt erst zum Zeitpunkt $t_7$ in die Regelung. Aus den Druckdiagrammen ist erkennbar, daß sich in einer solchen Situation die Druckregelung am low-Rad auf sehr niedrigem Niveau, am high-Rad dagegen auf einem vergleichweise hohen Niveau abspielt. Die hohe Druckdifferenz führt ohne Maßnahmen zur Giermomentenbeschränkung, zu hohen Giermomenten und zur Gefährdung der Fahrstabilität.

Die Akkumulation der Druckabbauvorgänge am high-Rad zeigt der Kurvenverlauf PA1, am low-Rad die Kurve PA2. Normierungsvorgänge, die zur Reduzierung des Akkumulatorinhaltes des low-Rades, Rad 2, führen, finden zum Zeitpunkt $t_8$, $t_{10}$, $t_{12}$ statt; der Eintritt des low-Rades in die stabile Phase zum Zeitpunkt $t_9$ und $t_{11}$ wirkt sich dagegen auf den Akkumulatorinhalt nicht aus, weil der Akkumulatorinhalt PA1 zu diesem Zeitpunkt bereits Null ist. Die während des gesamten dargestellten Bremsvorganges hohe Druckdifferenz DA12, die spätestens zum Zeitpunkt des Auftretens der Giermomentenspitze zur Gefährdung der Fahrstabilität des Fahrzeugs führen dürfte, ist ebenfalls in Fig. 3 wiedergegeben.

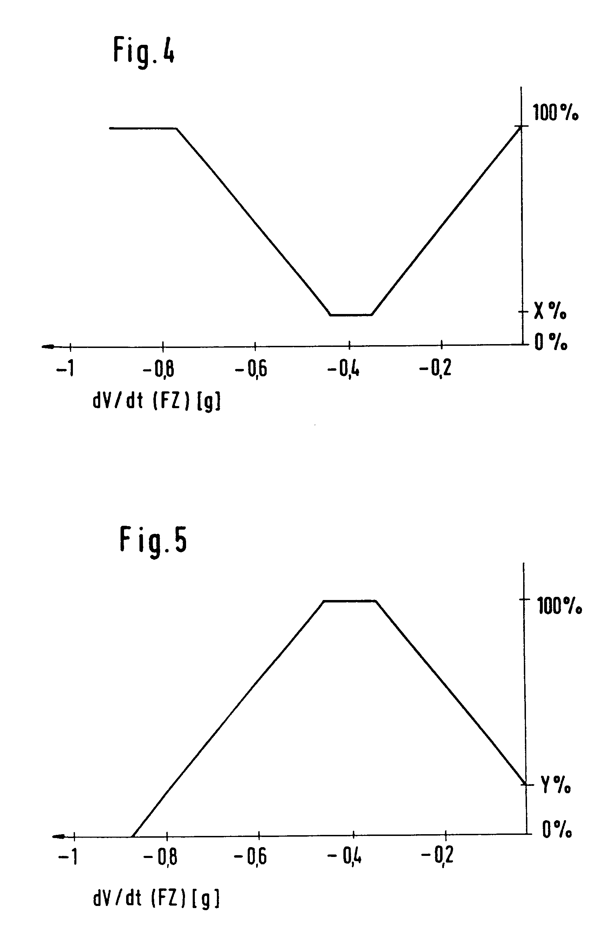

Die Diagramme nach den Fig. 4 bis 6 veranschaulichen die weiteren Maßnahmen nach der Erfindung.

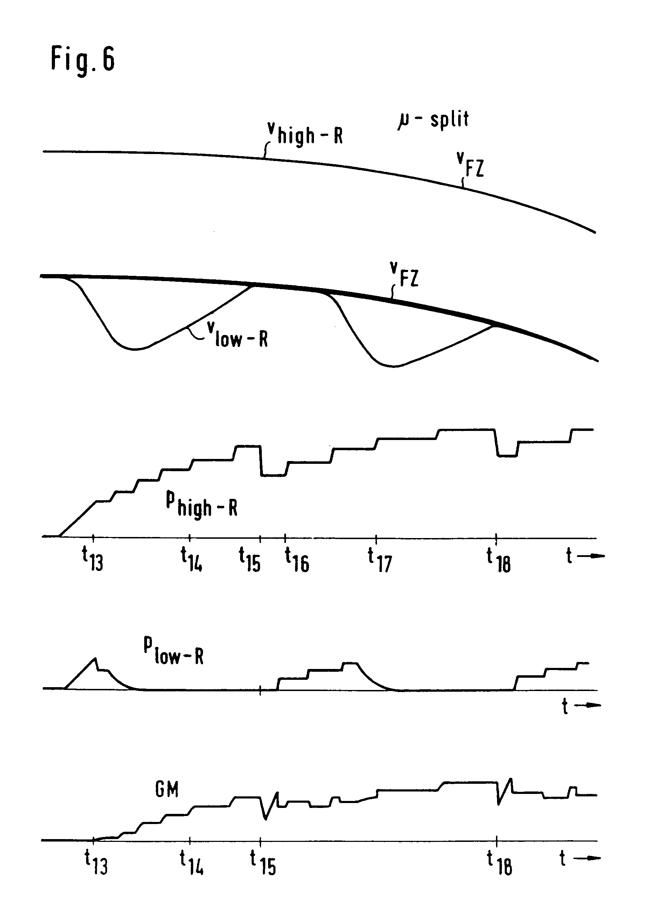

Fig. 6 bezieht sich auf eine Situation mit sehr unterschiedlichen Reibwerten auf der rechten und linken Fahrzeugseite ($\mu$-split) und auf eine Regelung mit Hilfe der erfindungsgemäßen Schaltungsanordnung. In der Situation nach Fig. 6 kommen die Vorzüge der erfindungsgemäßen Giermomentenbegrenzung voll zur Entfaltung.

Bei $\mu$-split-Bedingungen, also in Situationen mit Bedarf an einer Giermomentenbeschränkung, wird nach dem Einsetzen der Regelung (am low-Rad) auch der weitere Druckanstieg am high-Rad begrenzt. Nach Fig. 6, die die Radgeschwindigkeiten des high-Rades $V_{high-R}$ sowie am low-Rad $v_{low-R}$, ferner den Druckverlauf $P_{high-R}$ am high-Rad und $P_{low-R}$ am low-Rad sowie schließlich den Giermomentenverlauf GM wiedergibt, ist dieser Zeitpunkt des Regelungsbeginns für beide Räder mit $t_{13}$ bezeichnet.

Aus Fig. 6 ist zu erkennen, daß der mittlere Druckaufbaugradient am high-Rad in der hier dargestellten Situation mit hohem Reibwertunterschied auf der rechten und linken Fahrzeugseite durch die Giermomentenbeschränkung abgeflacht wird. Realisiert wird dies im vorliegenden Fall durch Erhöhung der zeitlichen Abstände zwischen den einzelnen Druckaufbaupulsen. Dies ist besonders deutlich im Anschluß an den Zeitpunkt $t_{14}$, $t_{16}$ und $t_{17}$ im Kurvenverlauf $P_{high-R}$ in Fig. 16 zu erkennen. Natürlich könnte man eine solche Abnahme bzw. Abflachung des Druckaufbaugradienten auch durch Verkürzung der Pulsdauer bei Beibehaltung des Pulsabstandes oder auf ähnliche Weise erreichen.

Für den durch die erfindungsgemäße Schaltungsanordnung modifizierten Druckaufbaugradienten gilt grundsätzlich die Beziehung

mod. Druckaufbaugrad. = Basis/Grad. * f(dDruckabb.) * f[dV/dt (FZ)].

Der Druckabbau und die Druckabbaudifferenz wird dabei in der anhand der Fig. 3 beschriebenen Weise ermittelt. Durch die Abhängigkeit von der Fahrzeugverzögerung, wiedergegeben durch den Ausdruck bzw. den Faktor f(dV/dt) wird erreicht, daß die erfindungsgemäße Giermomentenbeschränkung in dem für die Fahrzeugstabilität kritischen Bereich wesentlich anders als im übrigen Bereich reagiert. Der für die Fahrzeugstabilität kritische Bereich liegt - in Abhängigkeit von der Fahrzeugkonstruktion und Beladung - auf extrem unterschiedlichem Reibwert rechts/links (0,1/0,8) z.B. in einem Bereich von o,35 bis 0,4g. Deshalb wird erfindungsgemäß der mittlere Druckaufbaugradient in diesem Bereich wesentlich stärker abgeflacht als in den übrigen Bereichen. Bei sehr geringer Fahrzeugverzögerung und bei Werten über etwa 0,75g, die nur durch hohe Reibwerte auf beiden Fahrbahnseiten zu erreichen sind, entspricht der modifizierte Druckaufbaugradient praktisch dem Basis-Gradienten; es findet keine Abflachung statt. Fig. 4 veranschaulicht den Gradientenverlauf bzw. die Gradientenabflachung in Abhängigkeit von der Fahrzeugverzögerung. Der kritische Bereich liegt in diesem Beispiel bei einer Fahrzeugverzögerung von etwa 0,35g bis 0,45g. In diesem Bereich wird der modifizierte Gradient auf einen Wert von 10 bis 15% des Basis-Gradienten reduziert. Im Bereich von 0 bis 0,35g nimmt der modifizierte Gradient kontinuierlich ab, oberhalb von 0,45g wird die Abflachung wieder geringer. Schließlich stimmt ab einer Fahrzeugverzögerung von etwa 0,75g und höher der modifizierte Gradient zu 100% mit dem Basis-Gradienten überein.

Aus dem Druckverlauf $p_{high-R}$ am high-Rad und aus dem Verlauf des Giermomentes GM in Fig. 6 ist erkennbar, daß die erfindungsgemäße Schaltungsanordnung eine Absenkung des Druckes am high-Rad und damit eine Absenkung des Giermomentes unmittelbar vor dem Einlauf des low-Rades in den stabilen Bereich herbeiführt. Dieser Eintritt in die stabile Phase erfolgt in der anhand der Diagramme in Fig. 6 beschriebenen Situation zum Zeitpunkt $t_{15}$ und $t_{18}$.

Der Druckabbau am high-Rad zur "Entschärfung" der Giermomentenspitze wird in einem Ausführungsbeispiel der erfindungsgemäßen Schaltungsanordnung durch einen Druckabbaupuls ausgelöst, der sich bzw. dessen Dauer sich aus der Beziehung

$$T_{Puls-hR} = K * T_{Abb-IR} * f(dDruckabb.) * f[dV/dt (FZ)]$$

errechnet. Der von der Fahrzeugverzögerung abhängige Koppelfaktor, wiedergegeben durch den Ausdruck f[dV/dt (FZ)], in der Gleichung zur Bestimmung der Pulsdauer $T_{Puls-HR}$ ist in Fig. 5 in Abhängigkeit von der Fahrzeugverzögerung dargestellt. In dem vorliegenden Ausführungsbeispiel ist ebenso wie in Fig. 4 ein Fahrzeug zugrundegelegt, dessen stabilitätskritischer Bereich zwischen etwa 0,35g und 0,45g liegt. In diesem Bereich nimmt der Koppelfaktor seinen Maximalwert an. Außerhalb dieses Bereiches wird durch einen kleineren Koppelfaktor die Dauer des Druckabbaupulses $T_{Puls-hR}$ reduziert.

Durch den Druckabbaupuls zum Zeitpunkt $t_{15}$ und $t_{18}$ kurz vor dem Einlauf des low-Rades in die stabile Phase wird in diesem kritischen Bereich das mittlere Giermoment auf einen für die Fahrstabilität des Fahrzeugs unkritischen Wert reduziert. Der Druckabbaupuls erhöht die Seitenführungskraft des high-Rades, reduziert das Giermomentenmaximum und sorgt dafür, daß eine mittlere Druckdifferenz zwischen den beiden Rädern der einen Achse nicht überschritten wird. Im Vergleich zu herkömmlichen Verfahren kann die Bremsdruckbeaufschlagung des high-Rades höher werden, weil die Gefahr für die Fahrzeugstabilität durch die Giermomentenspitze beseitigt ist, was schließlich zu einer Verkürzung des Bremsweges führt.

Durch die beschriebene Anpassung der Giermomentenbeschränkung an die Fahrzeugverzögerung, die durch den Kurvenverlauf in Fig. 4 und Fig. 5 zum Ausdruck kommt, wird die Auswirkung der Giermomentenbeschränkung außerhalb des stabilitätskritischen Bereiches der Fahrzeugverzögerung reduziert und damit eine unnötige Verlängerung des Bremsweges verhindert.

**Patentansprüche**

1. Schaltungsanordnung (2) für eine Kraftfahrzeug-Bremsanlage mit elektronischer Blockierschutzregelung, mit Schaltkreisen zur individuellen Regelung des Bremsdruckes in den Radbremsen der beiden Räder einer Achse in Abhängigkeit von dem mit Radsensoren (S1-S4) gemessenen Raddrehverhalten, mit Schaltkreisen zur Beschränkung des Giermomentes infolge von Bremsdruckdifferenzen an den Rädern einer Achse, wobei die zulässige Druckdifferenz in Abhängigkeit von dem Reibwertunterschied an beiden Rädern variierbar ist, dadurch **gekennzeichnet**, daß Schaltkreise (6) vorhanden sind, die fortlaufend aus Druckabbausignalen einen die Druckdifferenz an den beiden Rädern der einen Achse wiedergebenden Wert (DA12) ermitteln,

die bei unterschiedlichen Reibwerten (μ-split) den mittleren Druckaufbaugradienten an dem high-Rad, d.h. an dem den geringeren Druckabbau aufweisenden Rad, in Abhängigkeit von der Druckdifferenz bzw. von dem die Druckdifferenz wiedergebenden Wert (DA12) und von der Fahrzeugverzögerung variieren

und die zum Zeitpunkt des Auftretens der sogenannten Giermomentenspitze, nämlich unmittelbar vor dem Wiedereintritt des low-Rades, d.h. des auf dem niedrigeren Reibwert laufenden Rades, in den stabilen Bereich, den Bremsdruck an dem high-Rad um einen von der Fahrzeugverzögerung und von der Druckdifferenz abhängigen Wert reduzieren.

2. Schaltungsanordnung nach Anspruch 1, dadurch **gekennzeichnet**, daß zur Ermittlung des Druckdifferenz-Wertes die Druckabbauzeiten radindividuell akkumuliert werden und die Differenz (DA 12) der in beiden Akkumulatoren vorhandenen Beträge (PA1, PA2) gebildet wird.

3. Schaltungsanordnung nach Anspruch 2, dadurch **gekennzeichnet**, daß der Inhalt (PA1, PA2) der beiden Akkumulatoren bei jedem Wiedereintritt eines der beiden Räder in die stabile Phase um den gleichen, maximal möglichen Betrag reduziert wird.

4. Schaltungsanordnung nach Anspruch 2 oder 3, dadurch **gekennzeichnet**, daß beim Akkumulieren der Druckabbauzeiten eine Gewichtung erfolgt, die den Verlauf der bremssystembedingten Druckabbau-Gradienten näherungsweise berücksichtigt.

5. Schaltungsanordnung nach einem oder mehreren der Ansprüche 1 bis 4, dadurch **gekennzeichnet**, daß der mittlere Druckaufbaugradient des an dem high-Rad anliegenden Bremsdruckes in Abhängigkeit von der Fahrzeugverzögerung verringert bzw. abgeflacht wird, wobei in einem bestimmten Bereich der Fahrzeugverzögerung, der bei hohen Reibwert-Unterschieden für die Fahrstabilität des Fahrzeugs besonders kritisch ist, die Abflachung des Druckaufbaugradienten maximal wird.

6. Schaltungsanordnung nach Anspruch 5, dadurch **gekennzeichnet**, daß das Maximum der Abflachung des Druckaufbaugradienten je nach Fahrzeug-Konstruktion in einem Bereich der Fahrzeugverzögerung zwischen 0,3g und 0,6g insbesondere zwischen 0,35g und 0,45g liegt.

7. Schaltungsanordnung nach einem oder mehreren der Ansprüche 1 bis 6, dadurch **gekennzeichnet**, daß diese den Zeitpunkt ($t_{15}$,$t_{18}$) unmittelbar vor dem Auftreten der Giermomentenspitze durch Bestimmung des Radschlupfes und der Wiederbeschleunigung des Rades ermittelt.

8. Schaltungsanordnung nach einem oder mehreren der Ansprüche 1 bis 7, dadurch **gekennzeichnet**, daß zur Giermomentenbeschränkung der Bremsdruck an dem high-Rad unmittelbar vor dem Auftreten der Giermomentenspitze durch einen Druckabbaupuls reduziert wird, der nach der Beziehung

$$T_{Puls-hR} = K * T_{Abb-IR} * f(dDruckabb.) * f[dV/dt(FZ)]$$

gemessen wird, wobei K eine von dem Druckabbaugradienten des Systems abhängige Konstante ist, $T_{Abb-IR}$ die Druckabbauzeit am low-Rad im jeweiligen Regelzyklus wiedergibt, f(dDruckabb.) eine Funktion der aus den Druckabbauzeiten ermittelten Druckdifferenz ist und f[dV/dt (FZ)] einen von der Fahrzeugverzögerung abhängigen Koppelfaktor darstellt.

9. Schaltungsanordnung nach Anspruch 8, dadurch **gekennzeichnet**, daß der von der Fahrzeugverzögerung abhängige Koppelfaktor (f-[dV/dt (FZ)]) im stabilitätskritischen Bereich der Fahrzeugverzögerung, z.B. im Bereich zwischen 0,35g und 0,45g, ein Maximum aufweist.

10. Schaltungsanordnung nach einem oder mehreren der Ansprüche 1 bis 9, dadurch **gekennzeichnet**, daß die Ansprechwerte der Giermomentenbeschränkung in Abhängigkeit von Signalen, die Schaltkreise zur Kurvenerkennung, Schaltkreise zur Schwingungserkennung und dergl. liefern, variierbar sind.

**Claims**

1. A circuit configuration (2) for an automotive vehicle brake system with electronic anti-lock control, including circuits for individually controlling the braking pressure in the wheel brakes of the two wheels of one axle as a function of the rotational behaviour of the wheels measured by wheel sensors (S1-S4), including circuits for limiting the yawing moment due to braking pressure differences at the wheels of one axle, with the permissible pressure difference being variable as a function of the friction value difference at the two wheels,

**characterized** in that circuits (6) are provided which continuously determine a value (DA12) from pressure reduction signals, this value representing the pressure difference at the two wheels of the one axle; which, in the case of different friction values (i.e. a μ-split situation), vary the mean pressure build-up gradient at the high-value wheel, i.e., at the wheel of less pressure reduction, as a function of the pressure difference or, rather, the value (DA12) representing the pressure difference and the vehicle deceleration; and which, at the time of the appearance of the so-called peak yawing moment, namely shortly before the low-value wheel, i.e., the wheel running on the lower friction value, reenters the stable range, reduce the braking pressure at the high-value wheel by a value dependent on the vehicle deceleration and on the pressure difference.

2. A circuit configuration as claimed in claim 1, **characterized** in that, for the purpose of detecting the pressure difference value, the pressure reduction times are accumulated individually per wheel and the difference (DA 12) is formed of the amounts (PA1, PA2) available in the two accumulators.

3. A circuit configuration as claimed in claim 2, **characterized** in that the contents (PA1, PA2) of the two accumulators is reduced by the same maximum amount possible each time either of the two wheels reenters the stable phase.

4. A circuit configuration as claimed in claim 2 or in claim 3, **characterized** in that pressure reduction times are accumulated and weighted to account for the variation of the brake-system-related pressure reduction gradients in approximation.

5. A circuit configuration as claimed in one or in several of claims 1 through 4, **characterized** in that the mean pressure build-up gradient of the braking pressure acting on the high-value wheel is reduced or, rather, is flattened as a function of the vehicle deceleration, the flattening of the pressure build-up gradient becoming maximal in a certain vehicle deceleration range which, with high friction value differences, is particularly critical to the driving stability of the vehicle.

6. A circuit configuration as claimed in claim 5, **characterized** in that, depending on the construction of the vehicle, the maximum of the flattening of the pressure build-up gradient lies in a vehicle deceleration range between 0.3g and 0.6g, in particular between 0.35g and 0.45g.

7. A circuit configuration as claimed in one or in several of claims 1 through 6, **characterized** in that the circuit configuration detects the time ($t_{15}$, $t_{18}$) shortly before the appearance of the peak yawing moment by determining the wheel slip and the reacceleration of the wheel.

8. A circuit configuration as claimed in one or in several of claims 1 through 7, **characterized** in that the braking pressure at the high-value wheel is reduced directly before the appearance of the peak yawing moment, for the purpose of yawing moment limitation, this reduction being effected by a pressure reduction pulse measured in accordance with the following relationship

$$T_{pulse-hR} = K * T_{Abb-IR} * f(dpress.red.) * f[dV/dt (FZ)]$$

wherein K is a constant depending on the pressure reduction gradient of the system, $T_{Abb-IR}$ represents the pressure reduction time at the low-value wheel in the respective control cycle, f(dpress.red.) is a function of the pressure difference determined from the pressure reduction times and f[dV/dt (FZ)] represents a coupling coefficient dependent on the vehicle deceleration.

9. A circuit configuration as claimed in claim 8, **characterized** in that the coupling coefficient (f[dV/dt (FZ)]) depending on the vehicle deceleration has a maximum in the vehicle deceleration range critical to stability, for instance, in the range between 0.35g and 0.45g.

10. A circuit configuration as claimed in one or in several of claims 1 through 9, **characterized** in that the response values of yawing moment limitation are variable as a response to signals supplied by circuits for corner identification, circuits for vibration identification, and the like.

## Revendications

1. Agencement de circuit (2), pour système de freinage pour véhicule automobile à régulation électronique antiblocage, comprenant des circuits servant à une régulation individuelle de la pression de freinage dans les freins de roue des deux roues d'un essieu en fonction du comportement des roues en rotation, mesuré au moyen de capteurs de roue (S1-S4), et des circuits servant à limiter le couple de lacet dû à des différences de pression de freinage sur les roues d'un essieu, la différence de pression admissible pouvant faire l'objet d'une variation en fonction de la différence entre les valeurs de frottement sur les deux roues, caractérisé en ce qu'il est prévu des circuits (6) qui, à partir de signaux de réduction de pression, déterminent d'une manière continue une valeur (DA12) correspondant à la différence de pression sur les deux roues d'un essieu, qui, dans le cas de valeurs de frottement différentes (division-$\mu$), font varier le gradient moyen d'augmentation de pression sur la roue haute, c'est--à-dire sur la roue présentant la réduction de pression la plus faible, en fonction de la différence de pression, ou de la valeur (DA12) correspondant à la différence de pression, et de la décélération du véhicule, et qui, à l'instant auquel a lieu ce qu'il est convenu d'appeler la pointe de couple de lacet, à savoir immédiatement avant la rentrée de la roue basse, c'est-à-dire de la roue se déplaçant à la valeur de frottement la plus basse, dans le domaine stable, réduisent la pression de freinage sur la roue haute, d'une valeur dépendant de la décélération du véhicule et de la différence de pression.

2. Agencement de circuit selon la revendication 1, caractérisé en ce que, pour la détermination de la valeur de la différence de pression, les durées de réduction de pression sont cumulées individuellement pour chaque roue et la différence (DA12) des valeurs (PA1, PA2) contenues dans les deux circuits de cumul est formée.

3. Agencement de circuit selon la revendication 2, caractérisé en ce que, lors de chaque rentrée de l'une des deux roues dans la phase stable, les contenus (PA1, PA2) des deux circuits de cumul sont réduits de la même valeur possible maximale.

4. Agencement de circuit selon l'une des revendications 2 et 3, caractérisé en ce qu'il est procédé, lors de la formation du cumul des durées de réduction de pression, à une pondération qui tient approximativement compte de la variation du gradient de réduction de pression dû au système de freinage.

5. Agencement selon l'une quelconque des revendications 1 à 4, caractérisé en ce que le gradient moyen d'augmentation de pression de la pression de freinage appliquée sur la roue haute est réduit ou aplani en fonction de la décélération du véhicule, l'aplanissement du gradient d'augmentation de pression étant maximal dans un domaine déterminé de la décélération du véhicule qui, dans le cas de différences élevées des valeurs de frottement, est critique pour la tenue de route du véhicule.

6. Agencement de circuit selon la revendication 5, caractérisé en ce qu'en fonction de la structure du véhicule, le maximum de l'aplanissement du gradient d'augmentation de pression est situé dans un domaine de décélération dui véhicule qui est compris entre 0,3.$g$ et 0,6.$g$, notamment entre 0,35.$g$ et 0,45.$g$.

7. Agencement de circuit selon l'une quelconque des revendications 1 à 6, caractérisé en ce que ce circuit détermine l'instant ($t_{15}$, $t_{18}$) qui précède immédiatement l'instant auquel a lieu la pointe de couple de lacet, au moyen d'une détermination du glissement de la roue et de la réaccélération de la roue.

8. Agencement de circuit selon l'une quelconque des revendications 1 à 7, caractérisé en ce que, pour la limitation du couple de lacet, la pression de freinage sur la roue haute est réduite, immédiatement avant qu'ait lieu la pointe de couple de freinage, au moyen d'une impulsion de réduction de pression qui est déterminée par la relation :

$$T_{Imp-Rh} = K * T_{Réd-Rb} * f(dRéd.press.) * f(dV/dt (FZ))$$

dans laquelle K est une constante dépendant du gradient de réduction de pression, $T_{Réd-Rb}$ correspond à la durée de réduction de pression sur la roue basse dans le cycle de régulation en cours, f(dRéd.press.) est une fonction de la différence de pression déterminée à partir des durées de réduction de pression et f-(dV/dt (FZ)) représente un facteur de couplage dépendant de la décélération du véhicule.

9. Agencement de circuit selon la revendication 8, caractérisé en ce que le facteur de couplage (f(dV/dt (FZ)) dépendant de la décélération du véhicule comporte un maximum dans le domaine de la décélération du véhicule qui est critique pour la tenue de route, par exemple dans le domaine compris entre 0,35.$g$ et 0,45.$g$.

10. Agencement de circuit selon l'une quelconque des revendications 1 à 9, caractérisé en ce que les valeurs de fonctionnement de la limitation de couple de lacet peuvent faire l'objet d'une variation en fonction de signaux que fournissent des circuits de reconnaissance de prise de virage, circuits de reconnaissance de vibrations et analogues.

Fig. 1

EP 0 583 252 B1

# Fig.2

# Fig.3

Fig.4

Fig.5

## Fig. 6

$\mu$ - split

$v_{high-R}$

$v_{FZ}$

$v_{FZ}$

$v_{low-R}$

$P_{high-R}$

$t_{13}$    $t_{14}$    $t_{15}$   $t_{16}$    $t_{17}$     $t_{18}$    $t \longrightarrow$

$P_{low-R}$

$t \longrightarrow$

GM

$t_{13}$    $t_{14}$   $t_{15}$      $t_{18}$    $t \longrightarrow$